# EUROPEAN PATENT SPECIFICATION

(11) **EP 0 960 322 B1**
(45) Date of publication and mention of the grant of the patent: **04.02.2004**
(21) Application number: 97952018.6
(22) Date of filing: 21.11.1997
(51) Int. Cl.: G01K 5/22

(54) **IMPROVEMENTS RELATING TO THERMOMETERS**
VERBESSERUNGEN AN THERMOMETERN
AMELIORATIONS CONCERNANT DES THERMOMETRES

(30) Priority: 27.01.1997 GB 9701588
(43) Date of publication of application: 01.12.1999
(73) Proprietor: UNILEVER PLC, London EC4P 4BQ (GB); UNILEVER N.V., 3013 AL Rotterdam (NL)
(72) Inventor: BELLARE, Jayesh, Ramesh, 3 Samruddhi TPS-V1,, Mumbai 4000054, Maharashtra (IN); NAIK, Vijay, Mukund, Nandadeep Coop. Housing Soc, Mumbai 400 063, Maharashtra (IN); SURESH, Sambamurthy, Jayaraman, 3B Agrasar, Mumbai 400 099, Maharasha (IN); VAIDYANATHAN, Balasubramanian, Adyar Madras 600 020 (IN)
(74) Representative: Elliott, Peter William
(86) International application number: PCT/EP1997/006678
(87) International publication number: WO 1998/033048

(56) References cited:
- US-A- 3 469 452
- US-A- 3 555 906
- US-A- 4 170 138

## Description

### Technical Field

The present invention concerns improvements relating to thermometers, more particularly "liquid-in-stem" thermometers and a method for their manufacture.

### Background of the Invention

Liquid-in-stem thermometers have been in use for more than three hundred years as versatile instruments for measurement of temperature of several systems. They are used for measuring temperatures of both materials and equipment in industrial, laboratory, clinical and pharmaceutical applications.

The liquid-in-stem thermometer in its simplest form consists of a transparent tubular stem with a capillary bore, a bulb fused to the stem, and a thermometric liquid filling in the bulb. Typically, a graduated scale is engraved in or attached to a portion of the stem. As is well known, the expansion or contraction of the liquid in the bulb caused by changes in the temperature of the liquid forces the liquid to traverse the capillary of the stem to or from the bulb. Providing that the thermometer has been properly calibrated, the position of the meniscus of the liquid thread in the capillary on the graduated scale, indicates the temperature being measured.

When thermometers are designed for use in clinical applications the capillary in the stem has a constriction near the bulb. When the bulb is brought into thermal contact with a warm body a thread of the thermometric liquid freely rises in the capillary of the stem and when the bulb is moved away from the source of heat, the thermometric liquid in the bulb contracts but the thread of liquid in the capillary above the constriction is not withdrawn into the bulb thus providing a maximum registration action. Such thermometers are reset by centrifugation or shake down.

In spite of the advances in the technology for sensing temperature and availability of electronic, electrical, mechanical, optical thermometers etc., liquid-in-stem thermometers are very popular because they are inexpensive, accurate, fairly trouble free and give reproducible results.

As is well known, mercury is one of the most commonly employed thermometric liquids and glass is the most commonly employed material of construction for the stem, in such thermometers.

Research has shown that accurate temperature readings of human body temperature are not obtained unless a thermometer is left in a subjects mouth for at least seven minutes. As might be expected with these long residence times, instances of thermometer breakage while the thermometer is in the mouth of a subject are not unknown. Several potential problems arise from thermometer breakage.

Use of mercury as the thermometric liquid in such liquid-in-stem glass thermometers has become a cause of concern, principally due to the potential toxicity of mercury should the thermometer become broken during use. In order to overcome this problem two main approaches have been considered (1) to make the mercury in glass thermometer more shatter proof and (2) to change the thermometric liquid to other less toxic or non toxic liquids.

US 4512668 discloses a thermometer that contains a heat expandable liquid in glass tube which also has supports to protect against breakage. The bulb is filled with an expandable fluid such as mercury or coloured alcohol. The mercury or coloured alcohol is sealed in the glass bulb/glass tube and rises and falls with changes in temperature.

JP 2118423 discloses a glass thermometer in which the outer surface of the glass tube is coated with a protective film made of a blend of 5-60 pts. wt. of one or more reinforcers from Li-Al silicate crystalline glass, zirconium silicate, aluminium hydroxide, hydroxyapatite, silica glass, borosilicate glass, silica rock, feldspars and bauxite in a form of powder, fibre or sphere and 100 parts wt. of a polymer compound.

US 5508003 discloses a metallic material having a solidification temperature below 0°C as a substitute for mercury. The material comprises an alloy of gallium, indium, zinc and copper.

EP 657023 B discloses to a clinical thermometer which registers the maximum temperature reached with a bulb and a measuring tube containing a liquid characterised in that the liquid is an eutectic alloy containing gallium in a concentration of 65-95 wt.%, indium in a concentration of 5-22 wt% and tin in a concentration of 0-11 wt%.

As will be noted, the alternatives to mercury suggested in the above mentioned disclosures are either liquid heavy metals which can have toxic effects on human beings or alcohols, which give a poor accuracy as regards the maximum reading.

US Patent 3 469 452 discloses a maximum reading constriction type clinical thermometer having a non-metallic thermometric liquid, such as glycerol, with a surface tension lower than that of water. It is stated therein that the surface tension of the thermometric liquid should be higher than the surface energy of the bore surface. It is expected the problems of thread breaking and loss of maximum registration accuracy would still occur with this thermometer.

Thus the prior art discloses alternatives to mercury in glass thermometers which either (i) employ toxic metal liquids as thermometric fluids, or (ii) face the problem of wetting of the capillary surface leading to thread breakage and loss of maximum registration accuracy during clinical use.

There is a need to provide liquid-in-stem thermometers, having non-toxic thermometric liquids with good performance in terms of minimal capillary wetting and thread breakage, and which are capable of accurately registering maximum observed temperature.

### Summary of the Invention

We have now determined that improved thermometers can be manufactured with an aqueous, electrolyte-containing thermometric liquid providing that at least the inner surface of the bore is of a material which has a surface energy which is half or less than the surface tension of the thermometric liquid.

Advantageously, the surface tension of the thermometric liquid is greater than that of water.

Accordingly, the present invention provides a thermometer comprising a capillary tube having a bore extending along the length of the tube, a bulb disposed at an end of the tube and in fluid communication with the said bore, and a thermometric liquid provided in the bulb, the said thermometric liquid being an aqueous solution of one or more electrolytes, said thermometric liquid having a surface tension greater than that of water and being substantially free of dissolved gases, at least the inner surface of the bore of the capillary tubing being a low surface energy material, the surface energy of the said low surface energy material being lower than the surface tension of the thermometric liquid by a factor which is at least two.

In embodiments of the present invention the entire capillary tube can be made of the low surface energy material. It is however preferable that the internal face of the capillary is coated with such material. As will be appreciated the use of a suitable low surface energy material enables thermometers to be made of a material other than glass. It is believed that the use of materials other than glass for the construction of the thermometer can significantly reduce the incidence of breakage.

In case of thermometers made for clinical use according to the invention, a constriction is provided in the bore of the capillary tubing close to the bulb so as to aid the registration of the maximum temperature.

It is preferred that the surface energy of the "low surface energy material" employed for making the clinical thermometer, is lower than the surface tension of the thermometric liquid by a factor which is at least four.

The present invention also relates to a method of making the coated type thermometers, as described above according to invention in which a low surface energy coating is formed in place on the internal face of the capillary.

The process essentially comprises the steps of formation of low surface energy coating on the internal face of the capillary tubing, filling the thermometer with the thermometric liquid substantially free of dissolved gases and sealing the same. However when a self-supporting low surface energy material is used in the construction of the capillary tubing, the step of coating is not necessary and the pre-fabricated thermometer body is filled with the thermometric fluid before sealing is effected.

Ensuring that the thermometric liquid is essentially free of dissolved gasses is advantageously accomplished by degassing of the thermometer and the thermometric liquid to substantially remove the free, adsorbed and dissolved gases before and during filling the thermometer. It is believed that such gases would be released inside the scaled thermometer resulting in inaccurate temperature measurement and maximum registration recording.

When the inner surface of the bore is glass and coated with a low surface energy material, it has been found advantageous to hydrothermally treat the inner surface of the bore prior to coating. It is believed that this improves adhesion of the coating material to the glass.

### Detailed Description of the Invention

In order that the invention may be further understood, preferred embodiments of the invention are described in detail below.

### Low surface energy material

Preferably, the low surface energy materials employed in the present invention are selected from fluorocarbon or silicone based polymers or copolymers.

Optionally, other low energy materials, such as aliphate or aromatic polyolefins, polyesters, polycarbonates may also be employed subject to the surface energy/surface tension constraint disclosed in the invention.

When the internal face of the capillary bore of a glass stem thermometer is provided with a low surface energy coating, some of the preferred reagents employed for the in place coating are allyl alkoxy silanes, fluoroaliphatic alkoxy silanes and fluoro aliphatic silyl ethers, such as octyltriethoxy silane, methyl trimethoxy silane, and fluoroaliphatic trimethoxy silane.

### Thermometric liquid & additives

The thermometric liquid used in the thermometer of the invention is an aqueous solution of one or more electrolytes which are non-toxic. The electrolytes are preferably selected from a range of salts that negatively adsorb at the air-water interface.

Examples of such materials are salts of lithium, lanthanum, magnesium, calcium, sodium, potassium individually or in combination. The preferred salts are halides of the above-mentioned metals and the most preferred ones are chlorides of lithium and lanthanum.

The concentration of such additives will vary depending on the material selected given variance in the surface tension of the thermometric liquid and other physical constraints such as the solubility limits, freezing point limits, ambient temperatures etc.

Typically, the concentration ranges from 15 to 40% w/w.

Additives to enhance the visibility of the thermometric liquid may be added and examples of such additives are water soluble dyes such as Tartrazine, Col sol Bri Blue (TM), Erythrosin, Rhodamin B, FDC-33, Ponceau SX (TM), Anstead Black (TM), Carmoisin, and Duasin acid (TM). Typically, the concentration of dye ranges from 0 to 10000 ppm.

### Constructional features

The dimensions of the thermometer that is, length, capillary bore width, bulb volume, etc. depend upon the temperature range, and least count under consideration for a given duty. Typically, the length of the thermometer of the invention may range from 5 to 50 cm, especially from 10 to 15 cm for clinical use thermometers. The width of the bore of the capillary is preferably from 20 to 200m. The preferred range for clinical use thermometer is 30-80m. The volume of the bulb is typically from 0.01 to 0.3 ml. The preferred range for clinical use thermometers is 0.03-0.07 ml.

The thermometer stem are made from any suitable transparent tubing material. The preferred materials are glass, quartz, polyolefins, polymethyl-methacrylate and polycarbonates etc. The capillary bore of a clinical thermometer is typically constricted at a location 0.5 to 1.5 cm above the bulb. The thermometer is suitably calibrated for reading temperatures spanning some range between the freezing point to the boiling point of the thermometric fluid.

A clinical thermometer is typically calibrated to read temperatures between 32 and 42°C.

The typical steps for the manufacture of the thermometer according to the invention:
a) hydrothermal treatment of empty thermometer,
b) coating the internal face of the capillary bore with the coating chemical, and,
c) filling the thermometer with a thermometric liquid, and sealing the stem.

In order that the present invention may be further understood it will be described hereinafter by way of example and with reference to the accompanying figures wherein:
Fig. 1 is a schematic representation of an apparatus used for coating the internal face of the capillary bore of the thermometer of the invention; and
Fig. 2 is a schematic representation of an apparatus used for filling thermometer of the invention with the thermometric liquid.

### EXAMPLE

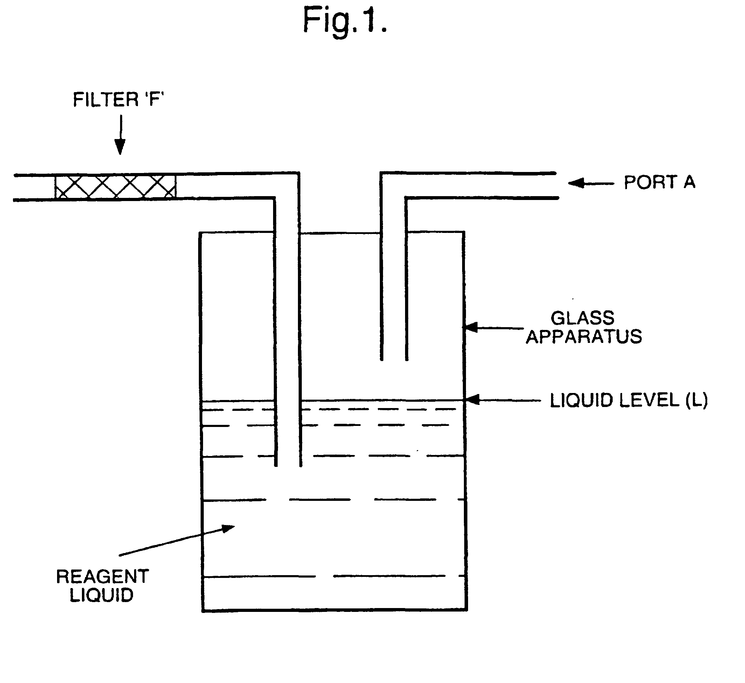

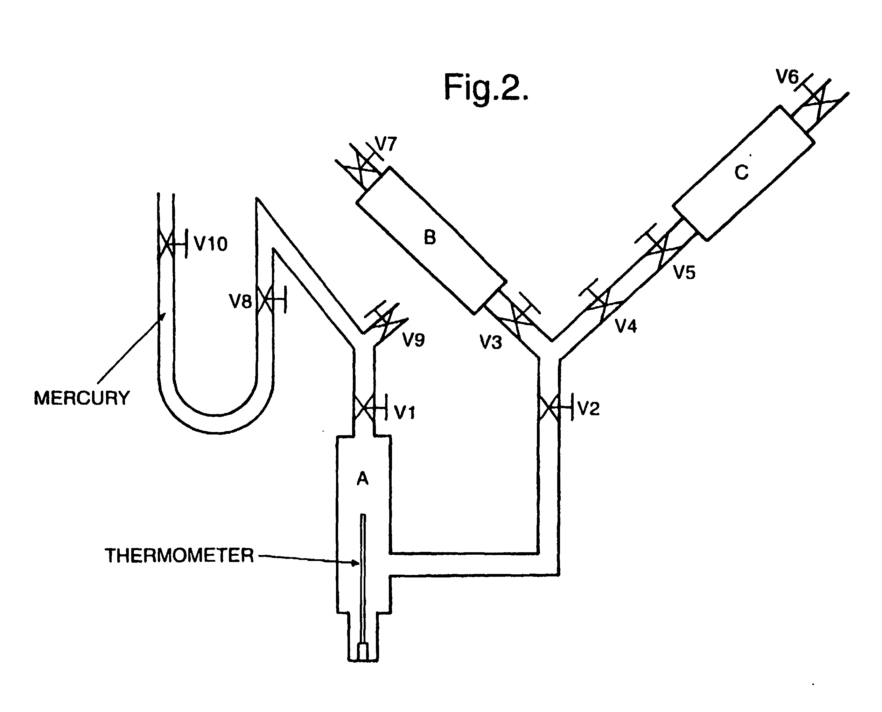

The figures 1 and 2 accompanying the text show the schematic representations of apparatus used for coating the internal face of the capillary bore apparatus used for filling thermometer with the thermometric liquid:

Water was triple distilled before use. Laboratory grade Lithium chloride was re-crystallised twice to obtain crystalline solid lithium chloride. Reagent 'L-12833' (TM) which is a fluoroaliphatic (trimethoxy) silyl ether was used as supplied by 3M. Analytical grade glycerol was procured from Merck, and was used as supplied. Empty clinical thermometers with standard dimensions and both ends (bulb side as well as top of the stem side) open were procured from Ponds Factory, Kodaikanal, India.

As noted above, the typical steps for the manufacture of the thermometer according to the invention are the following:
1. Hydrothermal treatment of empty thermometer, and
2. Preparation of the thermometric liquid,
3. Pre-treatment of a low-energy coating reagent,
4. Coating the internal face of the capillary bore with the coating reagent,
5. Filling the thermometer with the thermometric liquid, and sealing the stem.

These steps are described in greater detail below:

### 1. Hydrothermal treatment of empty thermometer:

The empty thermometer was filled with water using the apparatus of figure 1.

The thermometer was attached through a silicon tubing to the filter "F" with its stem end facing the filter. Water was introduced through port "A" until it reached level "L". Port "A" was then connected to a nitrogen cylinder, and nitrogen gas was fed into the system till the internal pressure of the apparatus reached 0.5 atmosphere absolute (1 atm = 101,32·10³ Pa). The nitrogen pressure forced the liquid to pass through the thermometer.

The water filled thermometer was removed from the apparatus. It was subsequently placed inside a water bath that was maintained at 100°C for a period of 12 hours. The thermometer was then removed from the water bath, again attached to apparatus in Fig. 1 and the water in the thermometer is flushed out by means of a nitrogen gas purge.

### 2. Preparation of the thermometric fluid :

250 ml of aqueous solution containing 39 weight % lithium chloride was prepared. 1000 ppm of Duasin acid (TM) was added to this mixture and mixed well. The resulting single-phase solution was later filtered through 0.45 micron filter.

### 3. Preparation of the coating reagent:

94.08 gms ethanol was added to 4.92 gms water. The pH of the mixture was adjusted to 2.0 by addition of 15% sulfuric acid. 1gm L-12833 was added to this mixture and the solution stirred for five minutes to obtain the coating chemical.

### 4. Coating the internal face of the capillary bore of the thermometers with the coating reagent:

The apparatus described in Figure 1 was filled with the coating chemical and the procedure outlined earlier was repeated to filling the empty, hydrothermally treated thermometer. Nitrogen pressure was released once the liquid reached the end of stem portion and just began to enter the bulb portion. The thermometer was then removed from the apparatus, and placed in an oven at 110°C for one hour. The treatment is repeated twice to obtain a flawless coating. The bulb of the thermometer was then sealed using a high temperature flame.

### 5. Filling the thermometer with the thermometric liquid, and sealing the stem :

The glass apparatus used for filling the thermometers with thermometer liquid is shown as Figure 2. Chamber "A" contained the empty thermometer, to be filled with the thermometric liquid. Chamber "B" contained water and chamber "C" contained the thermometric liquid. Valves are indicated by the symbol "V". Mercury was completely filled in the portion between valves "V8" and "V10". Glycerol was completely filled in the portion between valves "V4" and "V5".

Prior to beginning the process, valves "V6", "V7" and "V9" were opened to vacuum of about 0.3 torrs . 1 torr = 133,32 Pa.

After 30 minutes, valves "V6" and "V7" were closed and Valve "V8" was opened. The chambers "A" and "B" were submerged in water baths that were maintained at 95 C and 70 C respectively.

After 7 hours valves "V2" and "V3" were opened until the liquid water in chamber "B" completely filled apparatus "A". Valve "V1" was opened. Water was allowed to fill until the water level crossed valve "V9". Subsequently, valve "V9" was closed. Valve "V2" was also closed. Valve "V10" was opened to atmospheric pressure. The mercury pressurised water in the chamber "A", thus forcing the water to enter into the thermometer. After allowing about four hours for filling the thermometer, valve "V1" was closed. A vacuum of 0.4 torrs was applied to chamber "B" by opening valve "V7" to vacuum. All the water in apparatus "A" was sucked into apparatus "B" by opening valve "V2". Subsequently, valve "V3" was closed. Valve "V4" was opened to allow glycerol to flow into the bottom of chamber "A".

Chamber "A" was dipped in a water bath whose temperature was pre-set at 95°C. Valve "V9" was opened and connected to a vacuum of 0.4 torr. Valve "V3" was partially opened to allow water to drip from chamber "B" to chamber "A" at a rate of 1 drop in 30 seconds.

When the bulb of the thermometers were completely empty (all water had evaporated), valve "V3" was closed and valve "V5" was opened to let in the thermometric liquid into chamber "A". The thermometric liquid was allowed to fill until the liquid level crossed valve "V9". Subsequently, valve "V9" was closed. Valve "V2" was also closed. Valve "V10" was opened to atmospheric pressure.

The mercury pressurised the thermometric liquid for filling the thermometers in about four hours.

Subsequently all valves were closed. The apparatus was immersed in a water bath maintained at a pre-set value of 42°C. The thermometer was removed under water (by opening valves "V1" and "V9") and placed on a stand with its stem in the atmosphere and its bulb inside the water bath. A gas flame was directed at the stem, at a distance of 2 cm from the top of the stem. Once the heated portion of the stem became red-hot, it was mechanically pinched and the portion of the stem above the pinched point was discarded.

It has therefore been possible to obtain thermometers using non-toxic thermometric liquids that are capable of registering maximum temperature and show minimal thread breakage.

## Claims

1. A thermometer comprising a capillary tube having a bore extending along the length of the tube, a bulb disposed at an end of the tube and in fluid communication with the said bore, and a thermometric liquid provided in the bulb, the said thermometric liquid being an aqueous solution of one or more electrolytes, said thermometric liquid having a surface tension greater than that of water and being substantially free of dissolved gases, at least the inner surface of the bore of the capillary tubing being a low surface energy material, the surface energy of the said low surface energy material wherein is lower than the surface tension of the thermometric liquid by a factor which is at least two.

2. A thermometer according to claim 1 wherein the capillary tube is formed from said low surface energy material.

3. A thermometer according to claim 1 wherein the internal face of the capillary tube is coated with said low surface energy material.

4. A thermometer according to claim 1 wherein low surface energy material has a surface energy lower than the surface tension of the thermometric liquid by a factor which is at least four.

5. A thermometer according to claim 1 where the low surface energy materials employed in the present invention are selected from fluorocarbon or silicone based polymers or copolymers thereof, aliphatic or aromatic polyolefins. polyesters or polycarbonates.

6. A thermometer according to claims 1 where the thermometric is a salt of lithium, lanthanum, magnesium, calcium, sodium, potassium either individually or in combination.

7. A method of making a thermometer according to any one of claims 1-6 which comprises the steps of:
a) forming a low surface energy coating on the inner surface of the capillary tube,
b) filling the thermometer with the thermometric liquid substantially free of dissolved gases and,
c) sealing the thermometer.

8. A process according to claim 7 which further comprises the step of hydrothermally treating the inner surface of the capilliary bore prior to coating step (a).

9. A process according to claim 7 wherein coating is performed by treating the inner surface of the capillary tube with at least one allyl alkoxy silane, fluoroaliphatic alkoxy silane and fluoro aliphatic silyl ether.

## Patentansprüche

1. Thermometer, umfassend ein Kapillarrohr mit einer Bohrung, die sich entlang der Länge des Rohrs erstreckt, einen Kolben, der am Ende des Rohrs und in Flüssigkeitsverbindung mit der Bohrung angebracht ist und eine in dem Kolben bereitgestellte thermometrische Flüssigkeit, wobei die thermometrische Flüssigkeit eine wässrige Lösung von einem oder mehreren Elektrolyten darstellt, die thermometrische Flüssigkeit eine Oberflächenspannung größer als jene von Wasser aufweist und im Wesentlichen frei von gelösten Gasen ist, mindestens die innere Oberfläche der Bohrung des Kapillarrohrs ein Material mit geringer Oberflächenenergie darstellt, wobei die Oberflächenenergie des Materials mit niedriger Oberflächenenergie um einen Faktor, der mindestens zwei ist, niedriger als die Oberflächenspannung der thermometrischen Flüssigkeit ist.

2. Thermometer nach Anspruch 1, wobei das Kapillarrohr aus dem Material mit niedriger Oberflächenenergie gebildet wird.

3. Thermometer nach Anspruch 1, wobei die innere Fläche des Kapillarrohrs mit dem Material mit niedriger Oberflächenenergie beschichtet ist.

4. Thermometer nach Anspruch 1, wobei das Material mit niedriger Oberflächenenergie eine Oberflächenenergie aufweist, die um einen Faktor, der mindestens vier ist, niedriger als die Oberflächenspannung der thermometrischen Flüssigkeit ist.

5. Thermometer nach Anspruch 1, wobei die in der vorliegenden Erfindung angewendeten Materialien mit niedriger Oberflächenenergie aus Polymeren oder Copolymeren davon, die auf Fluorkohlenstoff oder Silicon basieren, aliphatischen oder aromatischen Polyolefinen, Polyestern oder Polycarbonaten ausgewählt sind.

6. Thermometer nach Anspruch 1, wobei der thermometrische Stoff ein Salz von Lithium, Lanthan, Magnesium, Calcium, Natrium, Kalium entweder einzeln oder in Kombination davon ist.

7. Verfahren zur Herstellung eines Thermometers nach einem der Ansprüche 1-6, das die Schritte umfasst von:
a) Bilden einer Beschichtung mit niedriger Oberflächenenergie auf der inneren Oberfläche des Kapillarrohrs,
b) Füllen des Thermometers mit der thermometrischen Flüssigkeit, die im Wesentlichen frei von gelösten Gasen ist und
c) Verschließen des Thermometers.

8. Verfahren nach Anspruch 7, das weiterhin den Schritt des hydrothermischen Behandelns der inneren Oberfläche der Kapillarbohrung vor dem Beschichtungsschritt (a) umfasst.

9. Verfahren nach Anspruch 7, wobei das Beschichten durch Behandeln der inneren Oberfläche des Kapillarrohrs mit mindestens einem Allylalkoxysilan, fluoraliphatischen Alkoxysilan und fluoraliphatischen Silylether ausgeführt wird.

## Revendications

1. Thermomètre comprenant un tube capillaire ayant un alésage s'étendant sur la longueur du tube, une cuvette disposée à l'extrémité du tube et en communication fluidique avec ledit alésage, et un liquide thermométrique fourni dans la cuvette, ledit liquide thermométrique étant une solution aqueuse d'un ou plusieurs électrolytes, ledit liquide thermométrique ayant une tension superficielle supérieure à celle de l'eau et étant sensiblement dépourvu de gaz dissous, au moins la surface interne de l'alésage du tube capillaire étant un matériau à énergie de surface faible, l'énergie de surface dudit matériau à faible énergie de surface est au moins deux fois inférieure à la tension superficielle du liquide thermométrique.

2. Thermomètre selon la revendication 1, dans lequel le tube capillaire est conformé dans ledit matériau à faible énergie de surface.

3. Thermomètre selon la revendication 1, dans lequel la face interne du tube capillaire est revêtue avec ledit matériau à énergie de surface faible.

4. Thermomètre selon la revendication 1, dans lequel le matériau à faible énergie de surface a une énergie de surface au moins quatre fois inférieure à la tension superficielle du liquide thermométrique,

5. Thermomètre selon la revendication 1, dans lequel les matériaux à faible énergie de surface employés dans la présente invention sont choisis parmi des polymères à base de fluorocarbure ou de silicone ou des copolymères de ceux-ci, de polyoléfines, polyesters ou polycarbonates aliphatiques ou aromatiques.

6. Thermomètre selon la revendication 1, dans lequel le liquide thermométrique est un sel de lithium, de lanthane, de magnésium, de calcium, de sodium, de potassium, soit individuellement ou en combinaison.

7. Méthode de fabrication d'un thermomètre selon l'une quelconque des revendications 1 à 6, comprenant les étapes consistant à :
a) former un revêtement à faible énergie de surface sur la surface interne du tube capillaire,
b) remplir le thermomètre de liquide thermométrique sensiblement dépourvu de gaz dissous,
c) fermer hermétiquement le thermomètre.

8. Méthode selon la revendication 7, comprenant en outre l'étape consistant à traiter hydrothermiquement la surface interne de l'alésage capillaire préalablement à l'étape de revêtement (a).

9. Méthode selon la revendication 7, dans laquelle le revêtement est réalisé en traitant la surface interne du tube capillaire avec au moins un allyl-alkoxy silane, un alkoxy-silane fluoroaliphatique, et un silyl-éther fluoroaliphatique.
